# EUROPÄISCHE PATENTSCHRIFT

(11) **EP 0 913 592 B1**
(45) Veröffentlichungstag und Bekanntmachung des Hinweises auf die Patenterteilung: **02.10.2002**
(21) Anmeldenummer: 98116344.7
(22) Anmeldetag: 28.08.1998
(51) Int. Cl.: F16B 13/12

(54) **Schlaganker**
Percussion dowel
Cheville à percussion

(30) Priorität: 30.10.1997 DE 19747860
(43) Veröffentlichungstag der Anmeldung: 06.05.1999
(73) Patentinhaber: fischerwerke Artur Fischer GmbH & Co. KG, 72178 Waldachtal (DE)
(72) Erfinder: Schäffer, Marc, Dipl.-Ing. (BA), 72160 Horb-Bildechingen (DE)

(56) Entgegenhaltungen:
- EP-A- 0 362 550
- DE-A- 2 914 074
- DE-U- 29 518 109
- FR-A- 1 222 787
- US-A- 5 628 579

## Beschreibung

Die Erfindung betrifft einen Schlaganker, der zur Verankerung in einem eine Hinterschneidung aufweisenden Bohrloch vorgesehen ist, mit den Merkmalen des Oberbegriffs des Anspruchs 1.

Derartige Schlaganker sind an sich bekannt, beispielhaft sei genannt der in der DE 31 02 708 A1 offenbarte Schlaganker. Der bekannte Schlaganker weist eine Spreizhülse mit einer axialen Bohrung auf, die an einem hinteren Ende des Schlagankers offen ist. Die Spreizhülse weist einen Spreizbereich auf, in dem durch Längsschlitze Spreizschenkel gebildet sind. Innerhalb des Spreizbereichs weist die Bohrung der Spreizhülse eine Verjüngung auf. Durch Eintreiben eines Spreizkörpers in die Verjüngung werden die Spreizschenkel auseinander- und damit die Spreizhülse im Spreizbereich aufgespreizt. Die Spreizhülse hintergreift mit ihrem aufgespreizten Spreizbereich die Hinterschneidung des Bohrlochs und ist auf diese Weise formschlüssig im Bohrloch verankert. Zusätzlich kann ein Kraftschluß durch Reibung zwischen dem aufgespreizten Spreizbereich und einer Bohrlochwandung bestehen.

Bei dünnwandigen Baustoffen aus Stein oder Beton, wie beispielsweise Hohlblocksteinen oder Hohlmasten aus Beton, wie sie für Straßenbeleuchtung oder Stromleitungen bekannt sind, bildet eine der beiden Oberflächen des Baustoffs die Hinterschneidung zur formschlüssigen Verankerung des Schlagankers. Es besteht jedoch das Problem, daß aufgrund der Dünnwandigkeit des Baustoffes die Spreizhülse ein Stück aus dem Bohrloch herausgezogen werden kann, bevor ihr aufgespreizter Spreizbereich in Anlage an die die Hinterschneidung des Bohrlochs bildende Oberfläche des Baustoffs gelangt und dadurch den Schlaganker durch Formschluß im Baustoff hält. Verstärkt wird das Problem, dadurch daß beim Bohren des Bohrlochs oftmals eine Abplatzung des Baustoffs auf einer Austrittsseite eines Bohrers aus dem Bohrloch entsteht, also aus der die Hinterschneidung bildenden Oberfläche des Baustoffs. Der Baustoff ist infolge der Abplatzung im Bereich des Bohrlochs noch dünner, die Spreizhülse läßt sich weiter herausziehen, bis ihr aufgespreizter Spreizbereich in formschlüssige Anlage an die in diesem Fall die Hinterschneidung bildende Abplatzung gelangt. Desweiteren ist die Tiefe der Abplatzung und damit die Dicke des dünnwandigen Baustoffs im Bereichs des Bohrlochs von Bohrloch zu Bohrloch unterschiedlich und nicht bekannt.

Hinzu kommt beim Einsetzen und Aufspreizen des bekannten Schlagankers in ein durchgehendes Bohrloch in einem dünnwandigen Baustoff, daß die die Hinterscheidung bildende Abplatzung üblicherweise einen größeren Öffnungswinkel als eine beispielsweise ausgeriebene Hinterscheidung am Grunde eines als Sackloch ausgebildeten Bohrlochs in einem Vollbaustoff aufweist. Die Spreizhülse liegt nur mit einem kleinen Teil der Fläche ihres aufgespreizten Spreizbereichs an der Abplatzung an, zwischen einem großen Teil der Fläche des Spreizbereichs und der Abplatzung besteht ein Zwischenraum. Dies bedingt einen schlechten Sitz des Schlagankers im dünnwandigen Baustoff mit verringerter Verankerungskraft.

Der Erfindung liegt die Aufgabe zugrunde, einen Schlaganker der eingangs genannten Art so auszubilden, daß er auch bei der Verankerung in einem durchgehenden Bohrloch in einem dünnwandigen Baustoff gute Verankerungswerte aufweist.

Diese Aufgabe wird erfindungsgemäß durch die Merkmale des Anspruchs 1 gelöst. Die Spreizhülse des erfindungsgemäßen Schlagankers weist einen weiteren Spreizbereich auf, der im folgenden als zweiter Spreizbereich bezeichnet wird. Zur Unterscheidung soll der eingangs erläuterte Spreizbereich mit erster Spreizbereich bezeichnet werden. Der zweite Spreizbereich ist axial versetzt zum ersten Spreizbereich an der Spreizhülse angeordnet, befindet sich also in einer anderen Tiefe im Bohrloch. Innerhalb des zweiten Spreizbereichs weist die Bohrung der Spreizhülse eine Verjüngung auf, sodaß die Spreizhülse durch Eintreiben eines Spreizkörpers in diese Verjüngung im zweiten Spreizbereich aufspreizbar ist. Dadurch ist es möglich,die Spreizhülse in geringerer Tiefe aufzuspreizen, wenn sich die Hinterscheidung des Bohrlochs in geringerer Tiefe befindet. Dies hat den Vorteil, daß sich der Schlaganker nicht oder allenfalls ein kurzes Stück aus einem Bohrloch in einem dünnwandigen Baustoff herausziehen läßt, bis der aufgespreizte zweite Spreizbereich seiner Spreizhülse formschlüssig in Anlage am Baustoff gelangt. Der erfindungsgemäße Schlaganker passt sich den Gegebenheiten, insbesondere der Tiefe der Hinterscheidung im Bohrloch an. Die Aufspreizung der beiden Spreizbereich kann mit einem oder auch mit zwei Spreizkörpern, die wahlweise verwendet werden, erfolgen.

In bevorzugter Ausgestaltung der Erfindung ist die Aufspreizung der beiden Spreizbereiche unterschiedlich, die radiale Aufweitung der Spreizhülse ist bei Aufspreizung im einen Spreizbereich größer als im anderen Spreizbereich und/oder ein Spreizwinkel, um den die Spreizhülse aufgespreizt wird, ist bei Aufspreizung im einen Spreizbereich größer als im anderen Spreizbereich. Die unterschiedliche Aufspreizung läßt sich durch Geometrie und Größe der Verjüngung der Bohrung der Spreizhülse im ersten und im zweiten Spreizbereich in gewünschter Weise einstellen. Ebenso kann die Aufspreizung der Spreizhülse in ihren beiden Spreizbereichen durch Verwendung verschiedener Spreizkörper unterschiedlich gewählt werden. Durch einen größeren Aufspreizwinkel in einem der beiden Spreizbereiche liegt die Spreizhülse mit diesem Spreizbereich im Wesentlichen vollflächig an einer Abplatzung eines dünnwandigen Baustoffs an, was einen guten Sitz des Schlagankers im dünnwandigen Baustoff mit hohen Verankerungswerten bewirkt.

Die unterschiedliche Aufspreizung der Spreizhülse in ihren beiden Spreizbereichen wird bei einer Ausgestaltung der Erfindung dadurch erzielt, daß sich eine Querabmessung der Bohrung der Spreizhülse über den ersten Spreizbereich hinweg um ein anderes Maß verkleinert als über den zweiten Spreizbereich hinweg. Diese unterschiedlichen Querabmessungsänderungen der Bohrung der Spreizhülse kann durch unterschiedliche Winkel der Verjüngungen der Bohrung zu einer Längsachse der Spreizhülse in den beiden Spreizbereichen und/oder durch in axialer Richtung unterschiedliche Längen der Verjüngungen des Bohrlochs in den beiden Spreizbereichen erzielt werden.

Die Verjüngungen können beispielsweise keilförmig oder konisch ausgebildet sein, wobei eine Keilform sowohl dachartig mit nur einer oder zwei Schrägflächen oder auch pyramidenförmig mit drei-, vier- oder mehreckiger Grundfläche umfasst. Auch können die Keil- oder Konusflächen in Längsrichtung gewölbt sein.

In bevorzugter Ausgestaltung weist der erfindungsgemäße Schlaganker einen zweiteiligen Spreizkörper auf. Ein erster Teil des Spreizkörpers ist in die Verjüngung im ersten Spreizbereich der Spreizhülse eintreibbar, um die Spreizhülse im ersten Spreizbereich aufzuspreizen. Ein zweiter Teil des Spreizkörpers ist in die Verjüngung der Bohrung der Spreizhülse im zweiten Spreizbereich eintreibbar, um die Spreizhülse im zweiten Spreizbereich aufzuspreizen. Die beiden Teile des Spreizkörpers werden vorzugsweise gemeinsam in die Spreizhülse eingetrieben, wobei eines der beiden Teile zurückgehalten wird, wenn sich die Spreizhülse in dem diesem Teil des Spreizkörpers zugeordneten Spreizbereich nicht aufspreizen läßt, da sich die Hinterscheidung des Bohrlochs im anderen Spreizbereich der Spreizhülse befindet. Das andere Teil des Spreizkörpers wird weiter eingetrieben und spreizt die Spreizhülse in dem ihm zugeordneten, anderen Spreizbereich auf.

Bei einer Ausgestaltung der Erfindung sind die beiden Teile des Spreizkörpers über eine Solltrennstelle miteinander verbunden. Sie werden gemeinsam in die Spreizhülse eingetrieben. Sofern das eine Teil des Spreizkörpers in der Verjüngung des diesem Teil zugeordneten Spreizbereichs der Bohrung der Spreizhülse zurückgehalten wird, trennen sich die beiden Teile des Spreizkörpers voneinander und das andere Teil des Spreizkörpers wird allein weiter eingetrieben.

Bei einer Ausgestaltung der Erfindung ist ein Teil des Spreizkörpers rohrförmig und es liegt ein beispielsweise bolzenförmiges, anderes Teil des Spreizkörpers in ihm ein.

Zur besseren Aufspreizbarkeit sind die Spreizbereiche der Spreizhülse mit Knickstellen begrenzt, die die Aufspreizung erleichtern.

Die Erfindung wird nachfolgend anhand eines in der Zeichnung dargestellten Ausführungsbeispiels näher erläutert. Es zeigen:
- Figur 1: eine Spreizhülse eines erfindungsgemäßen Schlagankers im Halbschnitt;
- Figur 2: die Spreizhülse aus Figur 1 in Stirnansicht gemäß Pfeil II in Figur 1;
- Figur 3: einen Spreizkörper des erfindungsgemäßen Schlagankers im Halbschnitt;
- Figur 4: den Schlaganker gemäß Figuren 1 bis 3 in verankertem Zustand, wobei die linke Bildhälfte die Verankerung in einem Vollbaustoff und die rechte Bildhälfte die Verankerung in einem dünnwandigen Baustoff zeigt.

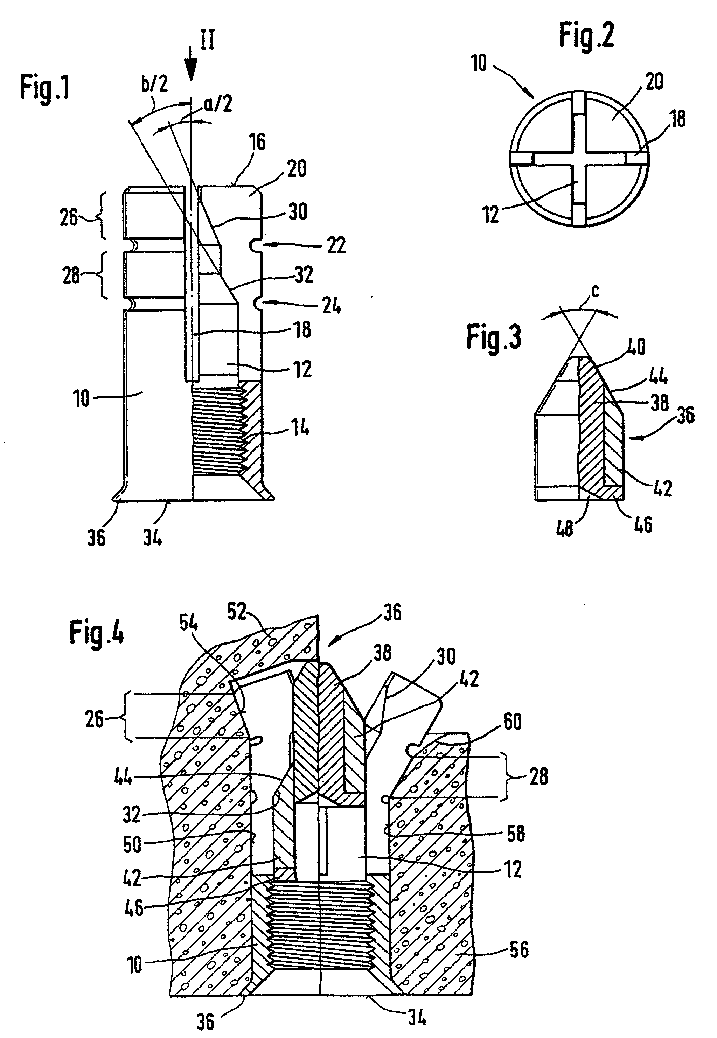

Der in der Zeichnung dargestellte, erfindungsgemäße Schlaganker weist eine Spreizhülse 10 aus Metall auf, wie sie in Figur 1 dargestellt ist. Die Spreizhülse 10 weist eine axiale Bohrung 12 auf, die in einem hinteren Bereich der Spreizhülse 10 mit einem Innengewinde 14 zur Befestigung eines nicht dargestellten Gegenstandes mit einer in das Innengewinde 14 einzuschraubenden, nicht dargestellten Schraube dient. Von einem vorderen - oder Einschlagende 16 her sind zwei einander kreuzende, sich über einen Teil der Länge der Spreizhülse 10 erstreckende Längsschlitze 18 angebracht, die die Spreizhülse 10 in ihrem vorderen Bereich in vier Spreizschenkel 20 unterteilen (Figur 2). Zwei umlaufende Nuten 22, 24 mit gerundetem Nutgrund bilden Knickstellen der Spreizschenkel 20, die zwei Spreizbereiche 26, 28 der Spreizhülse 10 begrenzen. Ein erster Spreizbereich 26 schließt sich unmittelbar an das vordere Ende 16 der Spreizhülse 10 an, ein zweiter Spreizbereich 28 schließt sich axial hinter dem ersten Spreizbereich 26 an.

Innerhalb der beiden Spreizbereiche 26, 28 verkleinert sich die Bohrung 12 mit je einer konischen Verjüngung 30, 32 zum vorderen Ende 16 der Spreizhülse 10 hin. Die erste Verjüngung 30 im ersten Spreizbereich 26 hat im dargestellten Ausführungsbeispiel einen Konuswinkel a von ca. 44° und ist damit kleiner als ein Konuswinkel b der zweiten Verjüngung 32 im zweiten Spreizbereich 28, der im dargestellten Ausführungsbeispiel 60° beträgt (in Figur 1 ist jeweils der halbe Konuswinkel a/2, b/2 der Verjüngungen 30, 32 zur Achse der Spreizhülse 10 eingezeichnet).

Ein hinteres Ende 34 der Spreizhülse 10 ist zu einem radial überstehenden Einschlagbund 36 aufgebördelt.

In der Bohrung 12 liegt ein Spreizkörper 36 ein, der in der Zeichnung in Figur 3 separat dargestellt ist. Der Spreizkörper 36 ist zweiteilig ausgebildet. Ein erstes Teil des Spreizkörpers 36 ist als zylindrischer Spreizbolzen 38 mit einer konischen Spitze 40 ausgebildet. Auf ihn ist als zweites Teil des Spreizkörpers 36 eine rohrförmige Spreizmuffe 42 mit einem konischen Ende 44 aufgeschoben. Die konische Spitze 40 des Spreizbolzens 38 und das konische Ende 44 der Spreizmuffe 42 haben im dargestellten Ausführungsbeispiel der Erfindung denselben Konuswinkel c, der mit dem Konuswinkel b der zweiten Verjüngung 32 der Bohrung 12 der Spreizhülse 10 übereinstimmt.

An einem hinteren Ende ist der den ersten Teil des Spreizkörpers 36 bildende Spreizbolzen 38 einstückig mit einem radial abstehenden Scherbund 46, der denselben Durchmesser wie die den zweiten Teil des Spreizkörpers 36 bildende Spreizmuffe 42 aufweist. An seiner rückwärtigen Stirnseite ist der Spreizbolzen 38 mit einem Zentrierkegel 48 versehen.

Die Verankerung des erfindungsgemäßen Schlagankers ist in Figur 4 dargestellt, wobei die linke Bildhälfte von Figur 4 die Verankerung in einem Vollbaustoff und die rechte Bildhälfte die Verankerung in einem dünnwandigen Baustoff zeigt. Ein solcher dünnwandiger Baustoff kann beispielsweise die Wand eines Hohlmastes aus Beton oder ein Steg eines Hohlblocksteines sein. Zur Verankerung in einem Vollbaustoff wird ein zylindrisches Bohrloch 50 in dem Vollbaustoff 52 angebracht. Im Bereich eines Grundes wird eine das Bohrloch 50 konisch erweiternde Hinterschneidung 54 in an sich bekannter Weise ausgerieben. In dieses Bohrloch 50 wird die Spreizhülse 10 mit dem in ihr einliegenden Spreizkörper 36 eingesteckt bzw. eingeschlagen, bis sie mit ihrem Einschlagbund 36 bündig mit dem Vollbaustoff 52 abschließt. Die Hinterschneidung 54 ist in einer Tiefe des Bohrlochs 50 ausgerieben, in der sich der erste Spreizbereich 26 der in das Bohrloch 50 eingesetzten Spreizhülse 10 befindet.

Anschließend wird der zweiteilige Spreizkörper 36 in die Verjüngungen 30, 32 der Bohrung 12 der Spreizhülse 10 eingetrieben, wobei ein nicht dargestelltes Eintreibwerkzeug, beispielsweise ein Einschlagdorn, einen Durchmesser aufweist, der nicht größer als ein Durchmesser des Spreizbolzens 38 ist. Beim Eintreiben des Spreizkörpers 36 in die Verjüngungen 30, 32 gelangt die Spreizmuffe 42 mit ihrem konischen Ende 44 in Anlage an die zweite Verjüngung 32 und wird von dieser rückgehalten, da der Vollbaustoff 52 ein Aufweiten des im zweiten Spreizbereich 28 der Spreizhülse 10 zylindrischen Bohrlochs 50 verhindert. Durch weiteres Eintreiben wird der Scherbund 46 am Übergang zu dem mit ihm einstückigen Spreizbolzen 38, der eine Solltrennstelle bildet, abgeschert. Der Scherbund 46 bleibt als lochscheibenförmiges Teil auf einer hinteren Stirnfläche der Spreizmuffe 42 aufliegend zurück. Durch Eintreiben des Spreizbolzens 38 in die erste Verjüngung 30 wird die Spreizhülse 10 in ihrem ersten Spreizbereich 26 konisch aufgespreizt, so daß sie die Hinterschneidung 54 des Bohrlochs 50 hintergreift. Der Schlaganker ist auf diese Weise formschlüßig im Bohrloch 50 verankert.

In einem dünnwandigen Baustoff 56, wie er in der rechten Bildhälfte von Figur 4 dargestellt ist, wird zur Verankerung des erfindungsgemäßen Schlagankers ein durchgehendes, zylindrisches Bohrloch 58 angebracht, in das die Spreizhülse 10 eingesteckt bzw. eingeschlagen wird, bis ihr Einschlagbund 36 bündig mit dem Baustoff 56 ist. Anschließend wird der Spreizkörper 36 in die Verjüngungen 30, 32 der Bohrung 12 der Spreizhülse 10 eingetrieben. Sofern eine Dicke des Baustoffs 56 einer Länge der Spreizhülse 10 von deren hinterem Ende 34 bis zum zweiten Spreizbereich 28 entspricht, oder wenn, wie im dargestellten Ausführungsbeispiel eine kraterförmige Abplatzung 60 beim Austritt eines Bohrers bei der Bohrlochherstellung entstanden ist, spreizt die Spreizmuffe 42 des Spreizkörpers 36 die Spreizhülse 10 über die zweite Verjüngung 32 im zweiten Spreizbereich 28 auf, so daß der erfindungsgemäße Schlaganker durch Hintergreifen des Baustoffs 56 bzw. durch Eingriff mit der Abplatzung 60 formschlüssig im Baustoff 56 verankert ist. Dabei wird der Scherbund 56 nicht abgeschert. Sofern der dünnwandige Baustoff 56 eine Dicke aufweist, die einer Länge der Spreizhülse 10 vom hinteren Ende 36 bis zum ersten Spreizbereich 26 entspricht, wird die Spreizhülse 10 wie zur linken Bildhälfte von Figur 4 beschrieben, in ihrem ersten Spreizbereich 26 aufgespreizt und dadurch im Baustoff 56 verankert. Ist der Baustoff 56 noch dicker, ist im Bohrloch 58 eine Hinterschneidung anzubringen, wie sie in der linken Bildhälfte von Figur 4 mit Bezugsziffer 54 dargestellt ist. Die Verankerung des erfindungsgemäßen Schlagankers erfolgt dann in der zur linken Bildhälfte von Figur 4 beschriebenen Weise.

Aufgrund des größeren Konuswinkels b der zweiten Verjüngung 32 ist die Aufspreizung im zweiten Spreizbereich 28 größer, wodurch die Verankerung des Schlagankers im dünnwandigen Baustoff 56 verbessert ist.

## Patentansprüche

1. Schlaganker zur Verankerung in einem eine Hinterschneidung aufweisenden Bohrloch, mit einer einen ersten Spreizbereich aufweisenden Spreizhülse, wobei die Spreizhülse eine Bohrung mit einer Verjüngung im ersten Spreizbereich aufweist, und mit einem Spreizkörper, der zur Verankerung des Schlagankers im Bohrloch in die Verjüngung der Bohrung im ersten Spreizbereich der Spreizhülse eintreibbar ist und der beim Eintreiben in die Verjüngung die Spreizhülse im ersten Spreizbereich aufspreizt, **dadurch gekennzeichnet, daß** die Spreizhülse (10) einen zweiten Spreizbereich (28) aufweist, der axial versetzt zum ersten Spreizbereich (26) an der Spreizhülse (10) angeordnet ist, wobei die Bohrung (12) der Spreizhülse (10) im zweiten Spreizbereich (28) eine Verjüngung (32) aufweist, in die ein Spreizkörper (36) eintreibbar ist, der beim Eintreiben in die Verjüngung im zweiten Spreizbereich (28) die Spreizhülse (10) im zweiten Spreizbereich (28) aufspreizt.

2. Schlaganker nach Anspruch 1, **dadurch gekennzeichnet, daß** die Aufspreizung der beiden Spreizbereiche (26, 28) unterschiedlich ist.

3. Schlaganker nach Anspruch 1, **dadurch gekennzeichnet, daß** die Bohrung (12) der Spreizhülse (10) über die Verjüngung (30) im ersten Spreizbereich (26) hinweg eine andere Querabmessungsänderung aufweist als über die Verjüngung (32) im zweiten Spreizbereich (28) hinweg.

4. Schlaganker nach Anspruch 1, **dadurch gekennzeichnet, daß** die Verjüngungen (30, 32) der Bohrung (12) der Spreizhülse (10) im ersten und im zweiten Spreizbereich (26, 28) im Wesentlichen keilförmig oder konisch sind.

5. Schlaganker nach Anspruch 4, **dadurch gekennzeichnet, daß** die Verjüngungen (30, 32) der Bohrung (12) der Spreizhülse (10) im ersten und im zweiten Spreizbereich (26, 28) unterschiedliche Längen aufweisen.

6. Schlaganker nach Anspruch 4, **dadurch gekennzeichnet, daß** die Verjüngungen (30, 32) der Bohrung (12) der Spreizhülse (10) im ersten und im zweiten Spreizbereich (26, 28) unterschiedliche Keil- bzw. Kegelwinkel (a, b) aufweisen.

7. Schlaganker nach Anspruch 1, **dadurch gekennzeichnet, daß** der Schlaganker einen zweiteiligen Spreizkörper (36) aufweist, dessen erster Teil (38) zum Aufspreizen des ersten Spreizbereichs (26) der Spreizhülse (10) und dessen zweiter Teil (42) zum Aufspreizen des zweiten Spreizbereichs (28) der Spreizhülse (10) vorgesehen ist.

8. Schlaganker nach Anspruch 7, **dadurch gekennzeichnet, daß** die beiden Teile (38, 42) des Spreizkörpers (36) über eine Solltrennstelle miteinander verbunden sind.

9. Schlaganker nach Anspruch 7, **dadurch gekennzeichnet, daß** ein Teil (42) des Spreizkörpers (36) rohrförmig ist, und daß der andere Teil (38) des Spreizkörpers (36) in dem rohrförmigen Teil (42) einliegt.

10. Schlaganker nach Anspruch 1, **dadurch gekennzeichnet, daß** die Spreizhülse (10) die Spreizbereiche (26, 28) begrenzende Knickstellen (22, 24) aufweist.

## Claims

1. Impact anchor for anchoring in a drilled hole having an undercut, having an expansible sleeve comprising a first expansion region, the expansible sleeve having a bore with a constriction in the first expansion region, and having an expander body that, to anchor the impact anchor in the drilled hole, is drivable into the constriction in the bore in the first expansion region of the expansible sleeve and which, on being driven into the constriction, expands the expansible sleeve in the first expansion region, **characterised in that** the expansible sleeve (10) comprises a second expansion region (28) which is arranged on the expansible sleeve (10) axially offset with respect to the first expansion region (26), the bore (12) of the expansible sleeve (10) in the second expansion region (28) having a constriction (32) into which an expander body (36) is drivable, which expander body, on being driven into the constriction in the second expansion region (28), expands the expansible sleeve (10) in the second expansion region (28).

2. Impact anchor according to claim 1, **characterised in that** the expansion of the two expansion regions (26, 28) is different.

3. Impact anchor according to claim 1, **characterised in that** the bore (12) of the expansible sleeve (10) over the constriction (30) in the first expansion region (26) has a different change in cross-section from that over the constriction (32) in the second expansion region (28).

4. Impact anchor according to claim 1, **characterised in that** the constrictions (30, 32) of the bore (12) in the expansible sleeve (10) in the first and in the second expansion regions (26, 28) are substantially wedge-shaped or conical.

5. Impact anchor according to claim 4, **characterised in that** the constrictions (30, 32) of the bore (12) of the expansible sleeve (10) are of different lengths in the first and in the second expansion regions (26, 28).

6. Impact anchor according to claim 4, **characterised in that** the constrictions (30, 32) in the bore (12) of the expansible sleeve (10) have different wedge or cone angles (a, b) in the first and in the second expansion regions (26, 28).

7. Impact anchor according to claim 1, **characterised in that** the impact anchor comprises a two-part expander body (36), the first part (38) of which is provided for expansion of the first expansion region (26) of the expansible sleeve (10) and the second part (42) of which is provided for expansion of the second expansion region (28) of the expansible sleeve (10).

8. Impact anchor according to claim 7, **characterised in that** the two parts (38, 42) of the expander body (26) are connected with one another by way of a rupturable connection.

9. Impact anchor according to claim 7, **characterised in that** one part (42) of the expander body (36) is tubular and the other part (38) of the expander body (36) lies in the tubular part (42).

10. Impact anchor according to claim 1, **characterised in that** the expansible sleeve (10) has bending points (22, 24) defining the expansion regions (26, 28).

## Revendications

1. Cheville à percussion pour ancrage dans un trou de forage présentant une contre-dépouille, avec une douille d'écartement présentant une première partie d'écartement, la douille d'écartement présentant un alésage avec un rétrécissement dans la première partie d'écartement, et avec un corps d'écartement qui peut être enfoncé dans le rétrécissement du trou de forage dans la première partie d'écartement de la douille d'écartement pour ancrage de la cheville à percussion dans l'alésage et qui écarte la douille d'écartement dans la première partie d'écartement lors de l'enfoncement dans le rétrécissement, **caractérisée en ce que** la douille d'écartement (10) présente une deuxième partie d'écartement (28) qui est disposée de manière décalée axialement par rapport à la première partie d'écartement (26) sur la douille d'écartement (10), l'alésage (12) de la douille d'écartement (10) dans la deuxième partie d'écartement (28) présentant un rétrécissement (32), dans lequel un corps d'écartement (36) peut être enfoncé, lequel corps écarte la douille d'écartement (10) dans la deuxième partie d'écartement (28) lors de l'enfoncement dans le rétrécissement dans la deuxième partie d'écartement (28).

2. Cheville à percussion selon la revendication 1, **caractérisée en ce que** l'écartement des deux parties d'écartement (26, 28) est différent.

3. Cheville à percussion selon la revendication 1, **caractérisée en ce que** l'alésage (12) de la douille d'écartement (10) présente, sur le rétrécissement (30) dans la première partie d'écartement (26), une autre modification de dimension transversale que sur le rétrécissement (32) dans la deuxième partie d'écartement (28).

4. Cheville à percussion selon la revendication 1, **caractérisée en ce que** les rétrécissements (30, 32) de l'alésage (12) de la douille d'écartement (10) dans la première et la deuxième parties d'écartement (26, 28) sont essentiellement en forme de clavette ou de cône.

5. Cheville à percussion selon la revendication 4, **caractérisée en ce que** les rétrécissements (30, 32) de l'alésage (12) de la douille d'écartement (10) dans la première et la deuxième parties d'écartement (26, 28) présentent des longueurs différentes.

6. Cheville à percussion selon la revendication 4, **caractérisée en ce que** les rétrécissements (30, 32) de l'alésage (12) de la douille d'écartement (10) dans la première et la deuxième parties d'écartement (26, 28) présentent des angles de cône ou de clavette (a, b) différents.

7. Cheville à percussion selon la revendication 1, **caractérisée en ce que** la cheville à percussion présente un corps d'écartement (36) en deux pièces, dont la première pièce (38) est prévue pour l'écartement de la première partie d'écartement (26) de la douille d'écartement (10) et dont la deuxième pièce (42) est prévue pour l'écartement de la deuxième partie d'écartement (28) de la douille d'écartement (10).

8. Cheville à percussion selon la revendication 7, **caractérisée en ce que** les deux pièces (38, 42) du corps d'écartement (36) sont raccordées entre elles à l'aide d'un point de jonction théorique.

9. Cheville à percussion selon la revendication 7, **caractérisée en ce qu'**une pièce (42) du corps d'écartement (36) est en forme de tube, et **en ce que** l'autre pièce (38) du corps d'écartement (36) est insérée dans la pièce en forme de tube (42).

10. Cheville à percussion selon la revendication 1, **caractérisée en ce que** la douille d'écartement (10) présente des points d'inflexion (22, 24) limitant les parties d'écartement (26, 28).
